Europäisches Patentamt

European Patent Office

Office européen des brevets

(19)

(11) Veröffentlichungsnummer: **0 243 740 B1**

# (12) EUROPÄISCHE PATENTSCHRIFT

(45) Veröffentlichungstag der Patentschrift: 07.08.91

(51) Int. Cl.⁵: **H04N 5/76**, H04N 7/087

(21) Anmeldenummer: 87105115.7

(22) Anmeldetag: 07.04.87

(54) Überführung von Fernsehempfänger-Abstimmdaten in einen angeschlossenen Videorecorder.

(30) Priorität: 24.04.86 DE 3613796

(43) Veröffentlichungstag der Anmeldung:
04.11.87 Patentblatt 87/45

(45) Bekanntmachung des Hinweises auf die
Patenterteilung:
07.08.91 Patentblatt 91/32

(84) Benannte Vertragsstaaten:
DE FR GB IT

(56) Entgegenhaltungen:
EP-A- 0 096 381
DE-A- 3 335 082

IEEE TRANSACTIONS ON BROADCAST AND
TELEVISION RECEIVERS, Band BTR-18, Nr. 4,
November 1972, Seiten 234-237; E.G. BREE-
ZE: "Television line 21 coded information
and its impact on receiver design"

GRUNDIG TECHNISCHE INFORMATIONEN,
Band 26, Nr. 5, 1979, Seiten 256-266; H.V.
SOOSTEN et al.: "Der Abstimmbaustein der
Synthesizer-Geräte Super-Color 80"

(73) Patentinhaber: GRUNDIG E.M.V. Elektro-
Mechanische Versuchsanstalt Max Grundig
holländ. Stiftung & Co. KG.
Kurgartenstrasse 37
W-8510 Fürth/Bay.(DE)

(72) Erfinder: König, Wolfgang
GRUNDIG E.M.V. Max Grundig Holl. Stiftung &
Co KG
Kurgartenstrasse 37 D-8510 Fürth(DE)
Erfinder: Kotter, Karl-Heinz, Dipl.-Ing.,
Dipl.-Wirtsch.-Ing
GRUNDIG E.M.V. Max Grundig Holl. Stiftung &
Co KG
Kurgartenstrasse 37 D-8510 Fürth(DE)
Erfinder: Junginger, Hans-Georg, Dr.
GRUNDIG E.M.V. Max Grundig Holl. Stiftung &
Co KG
Kurgartenstrasse 37 D-8510 Fürth(DE)
Erfinder: Harmsen, Pieter D.
GRUNDIG E.M.V. Max Grundig Holl. Stiftung &
Co KG
Kurgartenstrasse 37 D-8510 Fürth(DE)

**Beschreibung**

Die Erfindung befaßt sich mit der Erleichterung der Bedienung von Heimvideorecordern.

Gebräuchliche Heimvideorecorder sind mit einem kompletten Fernsehempfangsteil ausgerüstet, das den selbständigen Empfang eines jeweils ausgewählten örtlichen Fernsehsenders gestattet, das heißt, der dem Videorecorder für die Bildwiedergabe zugeordnet Fernsehempfänger kann bei der Aufzeichnung einer Fernsehsendung ausgeschaltet bleiben oder der Fernsehempfänger kann während der Aufzeichnung auf einen anderen örtlichen Fernsehsender abgestimmt werden. Durch diese Ausstattung des Videorecorders mit einem unabhängigen Fernsehempfangsteil ist es möglich, ein Programm mit dem Fernsehempfänger zu verfolgen und gleichzeitig ein anderes Programm mit dem Videorecorder aufzuzeichnen. Da gebräuchliche Videorecorder außerdem mit einer Schaltuhr ausgerüstet sind, ist es auch möglich, bei ausgeschaltetem Fernsehempfänger zu vorgegebenen Zeiten bestimmte Fernsehprogramme automatisch, also ohne Bedienung des Videorecorders, aufzuzeichnen.

Bei der ersten Inbetriebnahme des Videorecorders ergibt sich das Problem, daß der Benutzer das Empfangsteil des Videorecorders auf die örtlich empfangbaren Fernsehsender bzw. Programme einstellen und die dabei ermittelten Abstimmdaten im Speicher des Videorecorder-Empfangteils ablegen muß. Erst dann ist es möglich, daß der Videorecorder bestimmte ausgewählte Programme momentan oder zu vorgegebenen Zeiten aufzeichnet.

Die Einstellung und Abspeicherung der verschiedenen Fernsehsender bzw. Programme ist selbst bei optimaler Gestaltung der Bedienungsprozedur eine für den technischen Laien mühevolle und schwierige Aufgabe.

Es ist Aufgabe der Erfindung, den Benutzer des Videorecorders von der Notwendigkeit der Einstellung und Abspeicherung der Empfangsfrequenzen zu entlasten und damit die Bedienung des Videorecorders wesentlich zu vereinfachen.

Die Lösung dieser Aufgabe wird durch das Verfahren mit den Merkmalskombinationen gemäß den Ansprüchen des Patentes erreicht.

Gebräuchliche Heimvideorecorder sind mit einer Mehrfachsteckverbindung ausgestattet, die mit einer entsprechenden Mehrfachsteckverbindung um zugehörigen Fernsehempfänger über ein Kabel verbunden werden kann. Über diese mehradrige Verbindung werden Signale, z. B. Steuersignale oder Video/Audiosignale, zwischen dem Fernsehempfänger und dem Videorecorder ausgetauscht.

Der Erfindungsgedanke geht davon aus, daß bei der Aufstellung des Videorecorders alle für den Empfang der jeweils örtlichen Fernsehsender bzw. Programme notwendigen Abstimmdaten im Empfangsteil des Fernsehempfängers bereits abgespeichert sind. Gemäß dem Erfindungsgedanken werden diese Abstimmdaten über bestimmte ausgewählte Adern der Verbindung zwischen Fernsehempfänger und Videorecorder durch eine Befehlseingabe am Videorecorder oder Fernsehempfänger in den Abstimmdatenspeicher des Empfangsteils im Videorecorder übernommen. Dadurch ist sichergestellt, daß das Empfangsteil des Videorecorders für alle Fernsehsender bzw. Programme, auf die der zugehörige Fernsehempfänger bereits abgestimmt war, empfangsbereit und jeder weitere mühevolle Eingabevorgang überflüssig ist.

Zur automatischen Aufnahme von Fernsehprogrammen werden neuerdings die von den Fernsehsendern abgestrahlten Signale mit einer Sender- und Programmkennung in einer dafür reservierten Datenzeile versehen. Neuere Videorecorder werden deshalb mit einem Decoder ausgestattet, der diese Datenzeile auswertet, so daß der jeweils empfangene Fernsehsender bzw. das jeweils empfangene Fernsehprogramm erkannt werden kann. In einer Weiterbildung der Erfindungsgedankens wird deshalb das vom zugehörigen Fernsehempfänger gerade empfangene Fernsehsignal oder dessen Datenzeile über die mehradrige Verbindung dem Videorecorder zugeführt. Durch den Datenzeilen-Decoder des Videorecorders erfolgt eine Auswertung, derart, daß im Videorecorder das vom Fernsehempfänger gerade empfangene Programm erkannt wird. Nach dieser Erkennung stimmt der im Videorecorder ohnehin vorhandene Mikroprozessor das Empfangsteil des Videorecorders so ab, daß Fernsehempfänger und Videorecorder identische Programme bzw. Fernsehsendungen empfangen. Dabei werden mikroprozessorgesteuert im Videorecorder aus einem Speicher die Abstimmdaten aufgerufen, die dem vom Fernsehempfänger übernommenen Fernsehsignal bzw. dessen Datenzeile entsprechen. Nach diesem Vorgang kann der Fernsehempfänger ausgeschaltet und die Aufzeichnung des Videorecorders gestartet werden. Es ist dann sichergestellt, daß die Fernsehsendung bzw. das Fernsehprogramm, das auf den Fernsehempfänger verfolgt wurde, auch nach dem Ausschalten des Fernsehempfängers aufgezeichnet wird.

Die praktische Bedeutung dieses Vorgangs liegt darin, daß der Betrachter der Fernsehsendung bzw. des Fernsehprogrammes, der aus irgendeinem Grund die weitere Verfolgung der Sendung unterbrechen muß, auf sehr einfache Weise die Aufzeichnung des noch folgenden Restes der Sendung veranlassen kann. Für den Fall, daß die Abstimmdaten des vom Fernsehempfänger momentan empfangenen Programms im Abstimmspeicher des Videorecorders noch nicht enthalten sind, können im Videorecorder mikroprozessorgesteuert aus der decodierten Datenzeile die Abstimmdaten generiert, im Speicher abgelegt und sofort zur Abstimmung des Videorecorders-Empfangsteils aufgerufen werden.

## Patentansprüche

1. Verfahren zur Überführung von Fernsehempfänger-Abstimmdaten in einen angeschlossenen Videorecorder, wobei Fernsehempfänger und Videorecorder mittels eines mehradrigen Kabels und zugehörigen Steckverbindungen verbunden sind und über diese Verbindung ein Austausch von Signalen stattfindet, **gekennzeichnet durch** die Kombination folgender Merkmale:
   - Über die Verbindung werden über bestimmte Adern digitale Daten übertragen, so daß ein Datenbus verfügbar ist
   - Bei der digitalen Datenübertragung werden im Fernsehempfänger abgespeicherte oder in dem jeweiligen Empfangssignal des Fernsehempfängers enthaltene, die Empfangsfrequenzen kennzeichnende Daten vom Fernsehempfänger in den angeschlossenen Videorecorder überführt und dort abgespeichert
   - Die Überführung der Empfänger-Abstimmdaten in den Speicher des Videorecorders erfolgt nach einer Befehlseingabe am Videorecorder oder Fernsehempfänger

2. Verfahren nach Anspruch 1, **dadurch gekennzeichnet,** daß die Überführung der Empfänger-Abstimmdaten in den Speicher des Videorecorders automatisch beim Aufruf der Fernsehsender bzw. Programme durch die Bedienelemente des Fernsehempfängers erfolgt, derart, daß beim Angebot bestimmter Abstimmdaten jeweils im Videorecorder überprüft wird, ob diese Daten bereits im Abstimmspeicher des Videorecorder-Empfangsteils enthalten sind, und daß die Überführung dann erfolgt, wenn der Abstimmspeicher die Daten noch nicht enthält.

3. Verfahren zur Überführung von Fernsehempfänger-Abstimmdaten in einen angeschlossenen Videorecorder, wobei Fernsehempfänger und Videorecorder mittels eines mehradrigen Kabels und zugehöriger Steckverbindungen verbunden sind und über diese Verbindung ein Austausch von Signalen stattfindet, **dadurch gekennzeichnet,** daß über die über die mehradrige Verbindung mit dem Fernsehempfänger im Videorecorder verfügbare Datenzeile des vom Fernsehempfänger gerade empfangenen Fernsehsignals der zugehörige empfangene Fernsehsender erkannt wird und das Empfangsteil des Videorecorders mikroprozessorgesteuert diejenigen Abstimmdaten aus dem Speicher des Empfangsteils des Videorecorders abruft, die der Frequenz des vom Fernsehempfänger empfangenen Senders entsprechen und daß das Empfangsteil des Videorecorders daraufhin auf die gleiche Empfangsfrequenz wie der Fernsehempfänger abgestimmt wird.

4. Verfahren nach Anspruch 3, **dadurch gekennzeichnet,** daß im Videorecorder-Empfangsteil nach Maßgabe der in der Datenzeile erkannten Senderkennung geprüft wird, ob die entsprechenden Abstimmdaten bereits im Speicher des Empfangsteils des Videorecorders abgespeichert sind und wenn dies nicht der Fall ist, aus der Senderkennung der Datenzeile die Abstimmdaten mikroprozessorgesteuert generiert und im Speicher abgelegt werden.

## Claims

1. Method for transferring television receiver tuning data into a connected video recorder, television receiver and video recorder being connected by means of a multi-core cable and associated plug-in connections and an exchange of signals occurring via this connection, characterised by the combination of the following features:
   - digital data are transmitted via particular cores of the connection so that a data bus is available
   - during the digital data transmission, data identifying the received frequencies, stored in the television receiver or contained in the respective received signal of the television receiver, are transferred from the television receiver into the connected video recorder, where they are stored
   - the receiver tuning data are transferred into the store of the video recorder after a command input at the video recorder or the television receiver.

2. Method according to Claim 1, characterised in that the receiver tuning data are automatically transferred into the store of the video recorder when the television transmitter or programmes are called up by the operating controls of the television receiver, in such a manner that when particular tuning data are offered, a check is carried out in each case in the video recorder whether these data are already contained in the tuning store of the video recorder receiving section, and in that the transfer occurs when the tuning store does not yet contain the data.

3. Method for transferring television receiver tuning data into a connected video recorder, television receiver and video recorder being connected by means of a multi-core cable and associated plug-in connections and an exchange of signals occurring via this connection, characterised in that the associated received television transmitter is recognised via the data line, which is available in the video recorder via the multi-core connection to the television receiver, of the television signal just received from the television receiver and the receiving section of the video recorder calls up from the store of the receiving section of the video recorder under microprocessor control the tuning data which correspond to the frequency of the transmitter received by the television receiver, and in that the receiving section of the video recorder is thereupon tuned to the same received frequency as the television receiver.

4. Method according to Claim 3, characterised in that in the video recorder receiving section, a check is made in accordance with the determination of the transmitter identification recognised in the data line whether the corresponding tuning data are already stored in the store of the receiving section of the video recorder, and if this is not so, the tuning data are generated under microprocessor control from the transmitter identification of the data line and are stored in the store.

**Revendications**

1. Procédé pour la transmission de données de syntonisation d'un récepteur de télévision dans un enregistreur vidéo qui lui est raccordé, dans lequel le récepteur de télévision et l'enregistreur vidéo sont reliés par un câble à plusieurs conducteurs et par des connecteurs associés et un échange de signaux se produit par l'intermédiaire de cette liaison, caractérisé par la combinaison des caractéristiques suivantes :
   - on transmet des données numériques par la liaison, par l'intermédiaire de conducteurs déterminés de telle manière que l'on dispose d'un bus de données ;
   - lors de la transmission de données numériques, on transmet des données mémorisées dans le récepteur de télévision ou contenues dans le signal de réception respectif du récepteur de télévision et caractérisant les fréquences de réception, du récepteur de télévision à l'enregistreur vidéo qui lui est raccordé et on les mémorise dans ce dernier ;
   - la transmission des données de syntonisation du récepteur dans la mémoire de l'enregistreur vidéo s'effectue après l'envoi d'un ordre sur l'enregistreur vidéo ou sur le récepteur de télévision.

2. Procédé selon la revendication 1, caractérisé en ce que la transmission des données de syntonisation du récepteur dans la mémoire de l'enregistreur vidéo s'effectue de manière automatique lors de l'appel des émetteurs de télévision ou des programmes au moyen des éléments de commande du récepteur de télévision de telle manière que, lors de la soumission de données de syntonisation déterminées, on effectue à chaque fois un test dans l'enregistreur vidéo afin de savoir si ces données sont déjà contenues dans la mémoire de syntonisation de la partie réceptrice de l'enregistreur vidéo et en ce que la transmission ne s'effectue que lorsque la mémoire de syntonisation ne contient pas ces données.

3. Procédé pour la transmission de données de syntonisation d'un récepteur de télévision dans un enregistreur vidéo qui lui est raccordé, dans lequel le récepteur de télévision et l'enregistreur vidéo sont reliés par un câble à plusieurs conducteurs et par des connecteurs associés et un échange de signaux s'effectue par l'intermédiaire de cette liaison, caractérisé en ce que, au moyen des lignes de données du signal de télévision effectivement reçu par le récepteur de télévision qui sont disponibles dans l'enregistreur vidéo par l'intermédiaire de la liaison à plusieurs conducteurs avec le récepteur de télévision, on reconnait l'émetteur de télévision reçu et en ce que la partie réceptrice de l'enregistreur vidéo appelle, sous la commande d'un microprocesseur, à partir de la mémoire de la partie réception de l'enregistreur vidéo les données de syntonisation qui correspondent à la fréquence de l'émetteur reçu par le récepteur de télévision et en ce que la partie réceptrice de l'enregistreur vidéo est de ce fait syntonisée sur la même fréquence de réception que le récepteur de télévision.

4. Procédé selon la revendication 3, caractérisé en ce que dans la partie réceptrice de l'enregistreur vidéo, après détermination de la caractéristique de l'émetteur reconnu dans les lignes de données, on fait un test pour savoir si les données de syntonisation correspondantes sont déjà mémorisées dans la mémoire de la partie réceptrice de l'enregistreur vidéo et, lorsque cela n'est pas le cas, on génère, sous la commande d'un microprocesseur, à partir de la caractéristique de l'émetteur des lignes de données, les données de syntonisation et on les place dans la mémoire.